# EUROPÄISCHE PATENTSCHRIFT

(11) **EP 1 843 893 B1**
(45) Veröffentlichungstag und Bekanntmachung des Hinweises auf die Patenterteilung: **26.03.2008**
(21) Anmeldenummer: 06706492.3
(22) Anmeldetag: 31.01.2006
(51) Int. Cl.: B31B 1/82, B29C 65/18

(54) **VERFAHREN UND VORRICHTUNG ZUM FENSTEREINSCHWEISSEN IN FALTSCHACHTELZUSCHNITTEN**
METHOD AND DEVICE FOR HEAT-SEALING WINDOWS INTO FOLDING CARTON BLANKS
PROCEDE ET DISPOSITIF POUR SOUDER DES FENETRES DANS DES DECOUPES DE BOITES PLIANTES

(30) Priorität: 03.02.2005 DE 102005005215
(43) Veröffentlichungstag der Anmeldung: 17.10.2007
(73) Patentinhaber: Schröder-Frerkes, Julius, Dr., 40699 Erkrath (DE)
(72) Erfinder: Schröder-Frerkes, Julius, Dr., 40699 Erkrath (DE)
(74) Vertreter: Mey, Klaus-Peter
(86) Internationale Anmeldenummer: PCT/EP2006/000790
(87) Internationale Veröffentlichungsnummer: WO 2006/082012

(56) Entgegenhaltungen:
- DE-A1- 2 362 613
- DE-A1- 19 734 578
- JP-A- 54 146 185
- US-A- 2 680 471
- US-A- 3 833 446

## Beschreibung

Die Erfindung betrifft ein Verfahren und eine Vorrichtung zum Fenstereinschweißen in Faltschachtelzuschnitten zur Herstellung flüssigkeitsdichter Faltschachteln mit Folienfenstern, wobei maßgerecht zugeschnittene Folienstücke auf die Fensteröffnungen der Faltschachtelzuschnitte aufgelegt und die Ränder der Folienstücke mit Hilfe beheizter Andrucksegmente bzw. Schweißstempeln mit den Faltschachtelzuschnitten flüssigkeitsdicht verschweißt werden.

Die Herstellung von Faltschachteln mit Folienfenstern, wobei Folienstücke auf die Fensteröffnungen der Faltschachtelzuschnitte gelegt und dort befestigt werden, ist nach verschiedenen Verfahren bekannt. So wird in der DE-A-31 29 496 ein Verfahren zum kontinuierlichen Herstellen von Faltschachteln mit Folienfenstern beschrieben, bei dem der Fensteröffnungsbereich mit einem Folienstück aus flexiblem Kunststoffmaterial überklebt wird. Die Folie wird dabei von einer Vorratsrolle abgezogen, in Stücke geschnitten und möglichst passgenau über die vorgestanzten Fensteröffnungsbereiche geklebt.

In der EP-A-1 201 417 wird ein Verfahren zur mehrbahnigen Herstellung von Faltschachtelzuschnitten mit aufgeklebten Folienstücken beschrieben, wobei der Fensteröffnungsbereich der Faltschachtelzuschnitte an einer Leimstation mittels Klischeezylinder beleimt und auf die Leimstellen durch einen Saugzylinder Folienstücke gelegt werden. Der Transport der Faltschachtelzuschnitte erfolgt durch Saugriemen. Falls ein Faltschachtelzuschnitt ausbleibt, wird der Saugriemen mit Klebstoff kontaminiert und die nachfolgenden Faltschachtelzuschnitte mit Klebstoff unerwünscht verunreinigt. Es ist deshalb erforderlich, entweder den gesamten Klischeezylinder anzuheben oder die Saugriemen abzusenken. Um bei einer verhältnismäßig hohen Produktionsrate bei mehrbahniger Fahrweise eine Verunreinigung der nachfolgenden Faltschachtelzuschnitte zu vermeiden, werden die Saugriemen im Bereich der Klischeezylinder derart unterstützt, dass nur definierte Teilbereiche des betroffenen Saugriemens aus dem Kontaktbereich des Klischeezylinders entfernt werden müssen.

Zur Herstellung von flüssigkeitsdichten Faltschachteln mit Fenster, die eine dichte Verschweißung des Folienfensters mit der flüssigkeitsdichten Oberfläche der Faltschachtel durchführt, ist ein Verfahren bekannt, welches mittels beheizter Stempel das Folienfenster mit der Faltschachtel verschweißt. Dabei wird das Folienmaterial zunächst maschinell von einer Rolle abgezogen, auf Länge abgeschnitten und auf die Fensteröffnung der flachliegenden Faltschachtelzuschnitte aufgelegt. Der Faltschachtelzuschnitt wird auf einem Transportband bewegt, oberhalb dessen ein beheizter Stempel angeordnet ist, der auf das Folienfenster mit Druck abgesenkt wird und während des Schweißvorganges mit gleicher Geschwindigkeit wie das Transportband mitbewegt wird. Nach vollendeter Schweißung fährt der Stempel nach oben und wird gegen die Transportrichtung des Transportbandes wieder zurück in die Ausgangslage gefahren. Zur Leistungssteigerung ist es möglich, gleichzeitig mehrere Stempel in einem repetierenden Verfahren zu betreiben, wobei die Leistung dadurch begrenzt ist, dass verfahrensbedingt die Zeit für das Zurückfahren der Stempel in die Ausgangslage nicht für Schweißarbeit genutzt werden kann.

Ausgehend von diesem Stand der Technik ist es Aufgabe der Erfindung, ein Verfahren und eine Vorrichtung aufzuzeigen, mittels derer in möglichst einfacher und kostengünstiger Weise die kontinuierliche Herstellung flüssigkeitsdichter Faltschachteln mit Folienfenstern durch Verschweißen ermöglicht wird.

Zur Lösung der gestellten Aufgabe wird bei einem Verfahren der im Oberbegriff des Anspruchs 1 genannten Art mit der Erfindung vorgeschlagen, dass die Faltschachtelzuschnitte mit den Folienstücken mit einem Transportband einer Umlenktrommel für das Transportband zugeführt und in den Spalt zwischen der Umlenktrommel und dem auf diesem aufliegenden Transportband eingebracht werden und durch mindestens zwei am Außenumfang der Umlenktrommel angeordnete beheizte Andrucksegmente, die im Umlenkbereich des Transportbandes von innen radial gegen das Transportband und damit auf die Ränder der Folienstücke drücken, kontinuierlich verschweißt werden.

Der Durchmesser der Umlenktrommel ist dabei so groß gewählt, dass die Länge des Umlenkbereichs des Transportbandes die für den Verschweißvorgang benötigte zeitliche Verweildauer der Andrucksegmente auf den Folienstücken im Spalt zwischen dem Transportband und der Umlenktrommel bereitstellt.

Damit die Faltschachtelzuschnitte auf ihrem Transport sicher geführt und nach der Umlenkung des Transportbandes nicht frühzeitig herunterfallen, werden sie nach einer Ausgestaltung der Erfindung mit geeigneten Mitteln, beispielsweise mittels Saugvorrichtungen, auf dem Transportband örtlich fixiert. Entsprechend der Erfindung kann hierzu das Transportband als Saugband ausgebildet sein.

Damit die örtlich auf dem Transportband fixierten Faltschachtelzuschnitte im Spalt zwischen der Umlenktrommel dem Transportband im Umlenkbereich des Transportbandes lagegenau in Kontakt mit den Andrucksegmenten gelangen können, sind Transportband und Umlenktrommel mit Hilfe geeigneter Vorrichtungen, beispielsweise einer Mess- und Regeleinrichtung, die beispielsweise mit einer Lichtschranke zusammenwirkt, miteinander so synchronisiert, dass die Andruckkanten der Andrucksegmente passgenau auf die Ränder der Folienstücke gedrückt werden.

Um einen entsprechend hohen Druck zwischen dem Transportband und den Andrucksegmenten und damit auf die Ränder der Folienstücke aufrechtzuerhalten, wird das Transportband im Umlenkbereich durch mindestens zwei Stützrollen von außen radial gegen die Umlenktrommel gedrückt und so gegenüber den Andrucksegmenten abgestützt.

Weitere Einzelheiten und Vorteile der Erfindung werden nachfolgend an einem in einer schematischen Zeichnungsfigur dargestellten Ausführungsbeispiel näher erläutert.

In der Zeichnungsfigur ist in Form eines Ausschnitts ein Transportband 3 in einer Seitenansicht dargestellt, dessen Transportrichtung (siehe Richtungspfeil 8) durch eine in Drehrichtung 9 mit der Geschwindigkeit des Transportbands 3 umlaufenden Umlenktrommel 4 in die Gegenrichtung von unten nach oben umgelenkt wird. Hierbei wird die Umlenktrommel 4 vom Transportband 3 teilweise umschlungen, wobei der Umlenkbereich 11 etwa 180° beträgt. Die Umlenktrommel 4 besitzt an ihrem Außenumfang im dargestellten Ausführungsbeispiel vier mit gleichmäßigem Abstand voneinander angeordnete beheizte Andrucksegmente 5.

Auf dem Transportband 3 sind Faltschachtelzuschnitte 1 mit aufgelegten Folienstücken 2 angeordnet, deren Abstand voneinander dem Abstand zwischen den Andrucksegmenten 5 entspricht. Durch die Bewegung des Transportbandes 3 in Transportrichtung 8 zur Umlenktrommel 4 hin werden die Faltschachtelzuschnitte 1 dem zwischen der Umlenktrommel 4 und dem Transportband 3 ausgebildeten Spalt 10 zugeführt und durch den Transport des Transportbandes 3 und der Drehung der Umlenktrommel 4 in diesen Spalt 10 eingezogen.

Abweichend von der Darstellung in der Zeichnungsfigur fällt natürlich der Spalt 10 zwischen Transportband 3 und Trommel 4 zwischen den einzelnen Faltschachteln 1 zusammen.

Durch eine mittels einer Mess- und Regelstation (die Mess- und Regelstation ist nicht eingezeichnet) durchgeführte Synchronisation ist sichergestellt, dass die Faltschachtelzuschnitte 1 bezüglich ihrer Abstände sowie ihrer örtlichen Lage auf dem Transportband 3 so angeordnet sind, dass am Anfang des Umlenkbereichs 11 des Transportbandes 3 jeder Faltschachtel zuschnitt 1 mit einem der mit der Umlenktrommel 4 rotierenden beheizten Andrucksegmente 5 und dessen Andruckkanten 7 in Kontakt kommt.

Die Faltschachtelzuschnitte 1 mit ihren Folienstücken 2 befinden sich nun zwischen dem Transportband 3 und den Andrucksegmenten 5 bzw. deren Andruckkanten 7 und verbleiben während des gesamten Umlenkbereichs 11 in dieser Position. Durch die Spannung des Transportbandes 3 wird während der gesamten Verweilzeit der Faltschachtelzuschnitte 1 im Spalt 10 dabei ein radial wirkender Druck zwischen den Andruckkanten 7 und den Rändern der Folienstücke 2 aufrechterhalten, wodurch diese Ränder mit den Faltschachtelzuschnitten 1 flüssigkeitsdicht verschweißt werden. Zur Unterstützung dieses Drucks sind außerhalb des Transportbandes 3 im Umlenkbereich 11 vorzugsweise sechs Stützrollen 6 angeordnet, die einen radialen Gegendruck auf das Transportband 3 ausüben.

Damit die Faltschachtelzuschnitte 1 während ihres Transports zur Umlenktrommel 4 ihre Lage nicht verändern und insbesondere nach Verlassen der Umlenktrommel 4 nicht vom nun oben liegenden Transportband 3 frühzeitig herunterfallen, ist das Transportband mit (nicht dargestellten) Mitteln ausgebildet, durch die die Faltschachtelzuschnitte 1 ortsfest auf bzw. unter dem Transportband 3 fixiert sind.

Die Erfindung ist nicht auf das in der Zeichnungsfigur dargestellte Ausführungsbeispiel beschränkt, sondern beispielsweise bezüglich der Anzahl an Andrucksegmenten am Außenumfang der Umlenktrommel, der Länge des Umlenkbereichs des Transportbandes sowie der Lage der Umlenktrommel und der damit durchgeführten Richtungsumkehr des Transportbandes (im dargestellten Ausführungsbeispiel von unten nach oben) variabel anwendbar, wobei die kennzeichnenden Merkmale des Anspruchs 1 Bestand erfüllt werden sollten.

### Bezugszeichenliste

- 1: Faltschachtelzuschnitte
- 2: Folienstücke
- 3: Transportband
- 4: Umlenktrommel
- 5: Andrucksegmente
- 6: Stützrollen
- 7: Andruckkanten von 5
- 8: Transportrichtung von 3
- 9: Drehrichtung von 4
- 10: Spalt zwischen 3 und 4
- 11: Umlenkbereich von 3

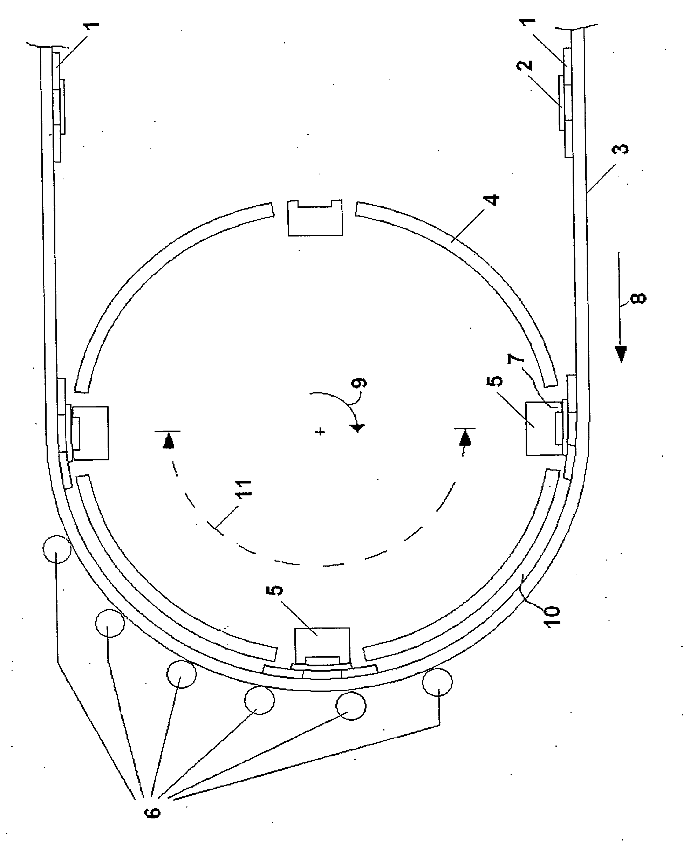

## Patentansprüche

1. Verfahren zum Fenstereinschweißen in Faltschachtelzuschnitten (1) zur Herstellung flüssigkeitsdichter Faltschachteln mit Folienfenstern, wobei maßgerecht zugeschnittene Folienstücke (2) auf die Fensteröffnungen der Faltschachtelzuschnitte (1) aufgelegt und die Ränder der Folienstücke (2) mit Hilfe beheizter Andrucksegmente bzw. Schweißstempeln (5) mit den Faltschachtelzuschnitten (1) flüssigkeitsdicht verschweißt werden, **dadurch gekennzeichnet, dass**
• die Faltschachtelzuschnitte (1) mit den Folienstücken (2) mit einem Transportband (3) einer Umlenktrommel (4) für das Transportband (3) zugeführt und
• in den Spalt (10) zwischen der Umlenktrommel (4) und dem auf diesem aufliegenden Transportband (3) eingebracht werden und dort
• durch mindestens zwei am Außenumfang der Umlenktrommel (4) angeordnete beheizte Andrucksegmente (5), die im Umlenkbereich (11) des Transportbandes (3) von innen radial gegen das Transportband (3) und damit auf die Ränder der Folienstücke (2) drücken, kontinuierlich verschweißt werden.

2. Verfahren nach Anspruch 1, **dadurch gekennzeichnet, dass** zu ihrem sicheren Transport die Faltschachtelzuschnitte (1) mit geeigneten Mitteln, beispielsweise Saugvorrichtungen, auf dem Transportband (3) örtlich fixiert werden.

3. Verfahren nach Anspruch 2, **dadurch gekennzeichnet, dass** das Transportband (3) mit der Umlenktrommel (4) mit Hilfe geeigneter Vorrichtungen, die beispielsweise mit einer Lichtschranke zusammenwirken, so miteinander synchronisiert ist, dass die auf dem Transportband (3) örtlich fixierten Faltschachtelzuschnitte (1) im Spalt (10) zwischen der Umlenktrommel (4) und dem Transportband (3) im Umlenkbereich (11) des Transportbandes (3) in Kontakt mit den Andrucksegmenten (5) gelangen und die Andruckkanten (7) der Andrucksegmente (5) passgenau auf die Ränder der Folienstücke (2) gedrückt werden.

4. Verfahren nach Anspruch 1, 2 oder 3, **dadurch gekennzeichnet, dass** das Transportband (3) im Umlenkbereich (11) des Transportbandes (3) mit Hilfe von Stützrollen (6) von außen radial gegen die Umlenktrommel (4) gedrückt wird.

5. Vorrichtung zum Fenstereinschweißen in Faltschachtelzuschnitten (1) zur Herstellung flüssigkeitsdichter Faltschachteln mit Folienfenstern, wobei maßgerecht zugeschnittene Folienstücke (2) auf die Fensteröffnungen der Faltschachtelzuschnitte (1) aufgelegt und die Ränder der Folienstücke (2) mit Hilfe beheizter Andrucksegmente (5) mit den Faltschachtelzuschnitten (1) flüssigkeitsdicht verschweißt werden, zur Durchführung des Verfahrens nach einem oder mehreren der Ansprüche 1 bis 4, **gekennzeichnet durch**
• ein Transportband (3) zum Transport der mit aufliegenden Folienstücken (2) versehenen Faltschachtelzuschnitte (1),
• eine Umlenktrommel (4) zur Richtungsumkehr des Transportbandes (3),
• mindestens zwei am Außenumfang der Umlenktrommel (4) angeordnete beheizte Andrucksegmente (5) mit Andruckkanten (7).

6. Vorrichtung nach Anspruch 5, **dadurch gekennzeichnet, dass** die geometrische Größe und Form der Andruckkanten (7) der Andrucksegmente (5) der Größe und Form der Ränder der Folienstücke (2) entsprechen.

7. Vorrichtung nach Anspruch 5 oder 6, **dadurch gekennzeichnet, dass** der Durchmesser der Umlenktrommel (4) mindestens so groß ist, dass der Umlenkbereich (11) des Transportbandes (3) die für den Verschweißvorgang benötigte zeitliche Verweildauer der Andrucksegmente (5) auf den Folienstücken (2) im Spalt (10) zwischen dem Transportband (3) und der Umlenktrommel (4) bereitstellt.

8. Vorrichtung nach Anspruch 7, **dadurch gekennzeichnet, dass** im Umlenkbereich des Transportbandes (3) mindestens zwei Stützrollen (6) angeordnet sind, die das Transportband (3) von außen radial gegen die Umlenktrommel (4) drücken.

9. Vorrichtung nach Anspruch 7 oder 8, **dadurch gekennzeichnet, dass** das Transportband (3) Mittel aufweist, durch die die aufliegenden Faltschachtelzuschnitte (1) auf dem Transportband (3) örtlich fixiert werden.

10. Vorrichtung nach Anspruch 9, **dadurch gekennzeichnet, dass** das Transportband (3) mit einer Saugvorrichtung versehen ist und/oder ein Saugriemen ist.

11. Vorrichtung nach einem oder mehreren der Ansprüche 5 bis 10, **dadurch gekennzeichnet, dass** eine Mess- und Regelvorrichtung das Transportband (3) mit der Umlenktrommel (4) so synchronisiert, dass die Andrucksegmente (5) der Umlenktrommel (4) mit ihren Andruckkanten (7) im Umlenkbereich (11) des Transportbandes (3) lagegenau auf die Folienstücke (2) gedrückt werden.

## Claims

1. Method for welding windows into collapsible box blanks (1) for producing liquid-tight collapsible boxes with film windows, wherein film pieces (2) cut correctly to size are laid on the window openings of the collapsible box blanks (1) and the edges of the film pieces (2) are liquid-tightly welded to the collapsible box blanks (1) with the help of heated pressing segments or welding rams (5), **characterised in that**
- the collapsible box blanks (1) together with the film pieces (2) are fed by a transport belt (3) to a deflecting drum (4) for the transport belt (3) and
- are introduced into the gap (10) between the deflecting drum (4) and the transport belt (3) resting thereon and
- are continuously welded there by at least two heated pressing segments (5), which are arranged at the outer circumference of the deflecting drum (11) and which in the deflection region (11) of the transport belt (3) press from inside radially against the transport belt (3) and thus on the edges of the film pieces (2).

2. Method according to claim 1, **characterised in that** the collapsible box blanks (1) are, for secure transport thereof, locally fixed by suitable means, for example suction devices, on the transport belt (3).

3. Method according to claim 2, **characterised in that** the transport belt (3) together with the deflecting drum (4) are so synchronised with one another with the help of suitable devices, which, for example, co-operate with a light barrier, that the collapsible box blanks (1) locally fixed on the transport belt (3) come into contact with the pressing segments (5) in the gap (10) between the deflecting drum (4) and the transport belt (3) in the deflection region (11) of the transport belt (3) and the pressing edges (7) of the pressing segments (5) are pressed precisely in fit on the edges of the film pieces (2).

4. Method according to claim 1, 2 or 3, **characterised in that** the transport belt (3) is pressed from outside radially against the deflecting drum (4) in the deflection region (11) of the transport belt (3) with the help of support rollers (6).

5. Device for welding windows into collapsible box blanks (1) for producing liquid-tight collapsible boxes with film windows, wherein film pieces (2) cut correctly to size are laid on the window openings of the collapsible box blanks (1) and the edges of the film pieces (2) are liquid-tightly welded to the collapsible box blanks (1) with the help of heated pressing segments (5), for carrying out the method according to one or more of claims 1 to 4, **characterised by**
- a transport belt (3) for transport of the collapsible box blanks (1) provided with the film pieces (2) laid thereon,
- a deflecting drum (4) for reversal of the direction of the transport belt (3) and
- at least two heated pressing segments (5), which are arranged at the outer circumference of the deflecting drum (4), with pressing edges (7).

6. Device according to claim 5, **characterised in that** the geometric size and shape of the pressing edges (7) of the pressing segments (5) correspond with the size and shape of the edges of the film pieces (2).

7. Device according to claim 5 or 6, **characterised in that** the diameter of the deflecting drum (4) is at least of such a size that the deflection region (11) of the transport belt (3) provides the dwell time, which is necessary for the welding process, of the pressing segments (5) on the film pieces (2) in the gap (10) between the transport belt (3) and the deflecting drum (4).

8. Device according to claim 7, **characterised in that** at least two support rollers (6) which press the transport belt (3) from outside radially against the deflecting drum (4) are arranged in the deflection region of the transport belt (3).

9. Device according to claim 7 or 8, **characterised in that** the transport belt (3) comprises means by which the collapsible box blanks (1) laid on the belt are locally fixed to the transport belt (3).

10. Device according to claim 9, **characterised in that** the transport belt (3) is provided with a suction device and/or a suction belt.

11. Device according to one or more of claims 5 to 10, **characterised in that** a measuring and regulating device so synchronises the transport belt (3) with the deflecting drum (4) that the pressing segments (5) of the deflecting drum (4) are pressed by their pressing edges (7) in the deflection region (11) of the transport belt (3) precisely in position on the film pieces (2).

## Revendications

1. Procédé de soudage de fenêtres dans des découpes de boîtes pliantes (1) pour la fabrication de boîtes pliantes étanches aux liquides dotées de fenêtres en film, des pièces de film (2) découpées à la bonne dimension étant appliquées sur les ouvertures de fenêtre des découpes de boîtes pliantes (1) et les bords des pièces de film (2) étant soudés de façon étanche aux fluides aux découpes de boîtes pliantes (1) à l'aide de segments de pression ou de baguettes à souder (5), **caractérisé en ce que**
- les découpes de boîtes pliantes (1) avec les pièces de film (2) sont amenées, à l'aide d'un convoyeur (3), jusqu'à un tambour de renvoi (4) pour le convoyeur (3), et
- sont introduites dans la fente (10) entre le tambour de renvoi (4) et le convoyeur (3) reposant sur celui-ci et à cet endroit
- sont soudées de façon continue par au moins deux segments de pression chauffés (5) disposés sur la périphérie extérieure du tambour de renvoi (4) qui, dans la zone de renvoi (11) du convoyeur (3), poussent de l'intérieur radialement contre le convoyeur (3) et ainsi sur les bords des pièces de film (2).

2. Procédé selon la revendication 1,
**caractérisé en ce que**
pour leur transport sûr, les découpes de boîtes pliantes (1) sont fixées localement à l'aide de moyens appropriés, par exemple des dispositifs d'aspiration, sur le convoyeur (3).

3. Procédé selon la revendication 2,
**caractérisé en ce que**
le convoyeur (3) est synchronisé avec le tambour de renvoi (4) à l'aide de dispositifs appropriés, qui coopèrent par exemple avec un relais photoélectrique, de telle sorte que les découpes de boîtes pliantes (1) fixées localement sur le convoyeur (3), dans la fente (10) entre le tambour de renvoi (4) et le convoyeur (3), dans la zone de renvoi (11) du convoyeur (3), viennent en contact avec les segments de pression (5), et les arêtes de pression (7) des segments de pression (5) sont poussées précisément sur les bords des pièces de film (2).

4. Procédé selon la revendication 1, 2 ou 3,
**caractérisé en ce que**
le convoyeur (3), dans la zone de renvoi (11) du convoyeur (3) est poussé de l'extérieur radialement contre le tambour de renvoi (4) à l'aide de rouleaux de soutien (6).

5. Dispositif de soudage de fenêtres dans des découpes de boîtes pliantes (1) pour la fabrication de boîtes pliantes étanches aux liquides dotées de fenêtres en film, des pièces de film (2) découpées à la bonne dimension étant appliquées sur les ouvertures de fenêtre des découpes de boîtes pliantes (1) et les bords des pièces de film (2) étant soudés de façon étanche aux fluides aux découpes de boîtes pliantes (1) à l'aide de segments de pression (5), pour réaliser le procédé selon l'une ou plusieurs des revendications 1 à 4,
**caractérisé par**
- un convoyeur (3) pour le transport des découpes de boîtes pliantes (1) pourvues de pièces de film (2) reposant sur celles-ci,
- un tambour de renvoi (4) pour l'inversion de la direction du convoyeur (3), et
- au moins deux segments de pression chauffés (5) dotés d'arêtes de pression (7) et disposés sur la périphérie extérieure du tambour de renvoi (4).

6. Dispositif selon la revendication 5,
**caractérisé en ce que**
la taille et la forme géométriques des arêtes de pression (7) des segments de pression (5) correspondent à la taille et à la forme des bords des pièces de film (2).

7. Dispositif selon la revendication 5 ou 6,
**caractérisé en ce que**
le diamètre du tambour de renvoi (4) est au moins tel que la zone de renvoi (11) du convoyeur (3) permet d'appliquer pendant la durée de séjour nécessaire au processus de soudage, les segments de pression (5) sur les pièces de film (2) dans la fente (10) entre le convoyeur (3) et le tambour de renvoi (4).

8. Dispositif selon la revendication 7,
**caractérisé en ce que**
dans la zone de renvoi du convoyeur (3) sont disposés au moins deux rouleaux de soutien (6) qui poussent le convoyeur (3) radialement de l'extérieur contre le tambour de renvoi (4).

9. Dispositif selon la revendication 7 ou 8,
**caractérisé en ce que**
le convoyeur (3) présente des moyens permettant de fixer localement sur le convoyeur (3) les découpes de boîtes pliantes (1) reposant sur celui-ci.

10. Dispositif selon la revendication 9,
**caractérisé en ce que**
le convoyeur (3) est pourvu d'un dispositif d'aspiration et/ou est une courroie d'aspiration.

11. Dispositif selon l'une ou plusieurs des revendications 5 à 10,
**caractérisé en ce qu'**
un dispositif de mesure et de réglage synchronise le convoyeur (3) avec le tambour de renvoi (4) de telle sorte que les segments de pression (5) du tambour de renvoi (4), avec leurs arêtes de pression (7), dans la zone de renvoi (11) du convoyeur (3), poussent sur les pièces de film (2) dans une position précise.
